# EUROPEAN PATENT SPECIFICATION

(11) **EP 4 405 590 B1**
(45) Date of publication and mention of the grant of the patent: **04.11.2026**
(21) Application number: 22769182.1
(22) Date of filing: 24.08.2022
(51) Int. Cl.: F16B 12/12, F16B 12/26

(54) **A CONNECTOR ASSEMBLY**
VERBINDERANORDNUNG
ENSEMBLE CONNECTEUR

(30) Priority: 24.09.2021 GB 202113697
(43) Date of publication of application: 31.07.2024
(73) Proprietor: Ovvotech Innovations Limited, Jonesborough, Newry County Down BT35 8SQ (GB)
(72) Inventor: PHILLIPS, Sean, Newry (GB); PHILLIPS, Donal, Newry (GB)
(74) Representative: FRKelly
(86) International application number: PCT/EP2022/073604
(87) International publication number: WO 2023/046401

(56) References cited:
- WO-A1-2013/080160
- DE-B3- 10 229 300
- FR-A- 1 546 888
- GB-A- 2 592 442
- US-A1- 2019 055 973
- US-A1- 2020 063 776
- US-B1- 6 364 586

## Description

### FIELD OF THE INVENTION

This invention relates to a connector assembly comprising a first article and a second article, for connecting the articles to one another, and in particular to a connector assembly connecting together component parts of a ready to assemble article of furniture. However, it is envisaged that a connector assembly in accordance with the present invention may be used for connecting numerous other objects and articles to one another.

### BACKGROUND OF THE INVENTION

Ready to assemble furniture has been known in the furniture industry for many years. This type of furniture construction provides a number of advantages to the manufacturer, to the retailer, and to the customer. For example, as to the manufacturer, there are significant cost savings in manufacturing unassembled furniture over conventional fully assembled furniture. Ready to assemble furniture can be supplied flat packed, thus requiring less storage space for both the manufacturer and the retailer. The customer ultimately benefits the lower cost of ready to assemble furniture as opposed to pre-assembled furniture and the ease of transport of flat packed ready to assemble furniture.

Unlike conventional fully or pre-assembled furniture, ready to assemble furniture, as the name implies, requires assembly by the customer. This furniture often requires the use of tools by the customer to enable the manipulation of specialized fittings to assemble and secure the various components of the furniture together. The customers may not have the necessary tools or skill level to assemble the furniture properly. The failure to do so may result in the furniture being unstable, and potentially collapsing during use. It is therefore desirable to provide ready to assemble furniture which can be assembled without the need for tools in a simple and efficient manner, while ensuring the integrity of the resulting assembled furniture.

As shown in WO 2018/019752, it is known to provide improved connector assemblies for connecting articles to one another, wherein the connector assembly comprising a male connector insertable into a substantially U shaped receiving channel defined by a respective female connector, said female connector being adapted to be located in a slot formed, in use, in one of at least two articles to be connected together. This type of connector assembly has the advantage of being able to be assembled without the use of tools. The slot is normally formed in a face of one of the articles by a milling process. The female connector is adapted to be retained within the milled slot by exerting a retaining force against the sides of the milled slot by means or barbs or shoulders formed on the outer sides of the female connector. Likewise, the male connector is retained in the receiving channel of the female connector by wings or other formations engaging in the inner sides of the female connector. As such, the connector assembly exerts considerable lateral forces against the sides of the milled slot. This can be a particular problem wherein the receiving slot is formed in or adjacent an edge of a panel, since the thickness of material on one or both sides of the receiving slot may be insufficient to withstand such lateral forces without the risk of splitting. Furthermore, the tooling required to form the milled slots can be costly and the formation of such receiving slots can be a relatively slow process. An object of the present invention is to provide a connector assembly which minimises such lateral forces and which avoids the need for milled slots.

US 6364586 and US 2019/055973 disclose known connector assemblies for ready to assemble furniture.

DE 102 29 300 B represents the closest prior art and discloses a connector assembly comprising a male and female connector, the female connector comprising cantilever arms that can be deflected by the male connector upon insertion in the female connector. The female connector is inserted in an oblong hole milled by a CNC tool.

### SUMMARY OF THE INVENTION

According to a first aspect of the present invention there is provided a connector assembly as claimed in claim 1.

The blind bores of said first receiving recess have equal radii, the spacing of the centres of said blind bores being less than the radius of each bore.

Preferably the outer face of each cantilevered arm is barbed to grip the inner faces of the first receiving recess.

The outer surfaces of the female connector are preferably shaped to correspond to the internal surfaces of the first receiving recess.

The first connecting portion of the male connector preferably includes ramped side regions adapted to engage said inner faces of the cantilevered arms of the female connector as the male connector is inserted therein.

The inner side faces of the receiving channel of the female connector and cooperating outer side faces of the first connecting portion of the male connector are provided with cooperating formation to retain the male connector within the female connector when the first connecting portion of the male connector is inserted into the receiving channel of the female connector.

In one embodiment the inner sides of the receiving channel defined by the female connector may comprise a pair of opposing shoulders and narrowed neck region, said first connecting portion of the male connector comprising at least one rib extending outwardly from an enlarged base region of the male connector and terminating in a head region, a pair of symmetrically arranged outwardly flared resilient wings having a substantially arrow head shaped cross section extending from the head region towards said base region on either side of said at least one rib, whereby said resilient wings of said first connecting portion of the male connector are adapted to engage said opposing shoulders of the female connector when the male connector is inserted into the female connector to retain the male connector in engagement with the female connector.

According to a further aspect of the present invention there is provided a method of assembling first and second articles as claimed in claim 8.

Said blind bores of said first receiving recess have equal radius, the spacing of the centres of said blind bores being less than the radius of each bore.

The method comprises the further step of drilling at least one blind bore in a face of the second article to define at least one second receiving recess and inserting at least one second connecting portion of the male connector into said at least one second receiving recess to secure the male connector to the second article. The at least one second connecting portion of the male connector may be provided with barbs or other formations to retain the at least one second connecting portion of the male connector within the at least one second receiving recess.

The end portions of the of the female connector comprise integrally formed cantilevered arms extending towards an inner end of the female connector and each having an outer face and an inner face, the inner face of each cantilevered arm defining a ramped surface engaged by the first connecting portion of the male connector as it is inserted into the receiving channel of the female connector, thereby deflecting said cantilevered arms outwardly against the inner end faces of the first receiving recess. An outer surface of each cantilevered arm may be barbed to grip the inner end faces of the first receiving recess.

### BRIEF DESCRIPTION OF THE DRAWINGS

Connector assemblies in accordance with different embodiments of the present invention will now be described by way of example only, with reference to the accompanying drawings, in which:-
Figures 1 and 2 are perspective views of a female connector of a connector assembly according to a first embodiment of the present invention;
Figure 3 is a bottom view of the female connector of Figures 1 and 2;
Figure 4 is sectional view on line B-B of Figure 3;
Figure 5 is a side view of the female connector of Figure 1;
Figure 6 is a top view of the female connector of Figure 1;
Figure 7 is an end view of the female connector of Figure 1;
Figure 8 is a sectional view on line C-C of Figure 5
Figures 9 and 10 are perspective views of a male connector of the connector assembly according to a first embodiment of the present invention;
Figure 11 is a side view of the male connector of Figures 9 and 10;
Figure 12 is an end view of the male connector of Figure 11;
Figure 13 is an end view of the male connector of Figure 9;
Figure 14 is a perspective view of a receiving recess formed in a first article for receiving the female connector of Figure 1 to 8;
Figure 15 is a side view of the receiving recess of Figure 14;
Figure 16 is a plan view of the receiving recess for Figure 14;
Figure 17 is a perspective view of a receiving recess formed in a second article for receiving the male connector of Figures 9 to 14;
Figure 18 is a plan view of the receiving recess of Figure 17;
Figure 19 is a side view of the receiving recess of Figure 17;
Figure 20 is a sectional view showing the assembled connector assembly of the first embodiment of the present invention;
Figure 21 is a perspective view of a female connector of a connector assembly not in accordance with the present invention;
Figure 22 is a further perspective view of the female connector of Figure 21;
Figure 23 is a sectional view through the female connector of Figure 21; and
Figure 24 is a perspective view of a connector assembly in accordance with a third embodiment of the present invention.

### DETAILED DESCRIPTION OF THE DRAWINGS

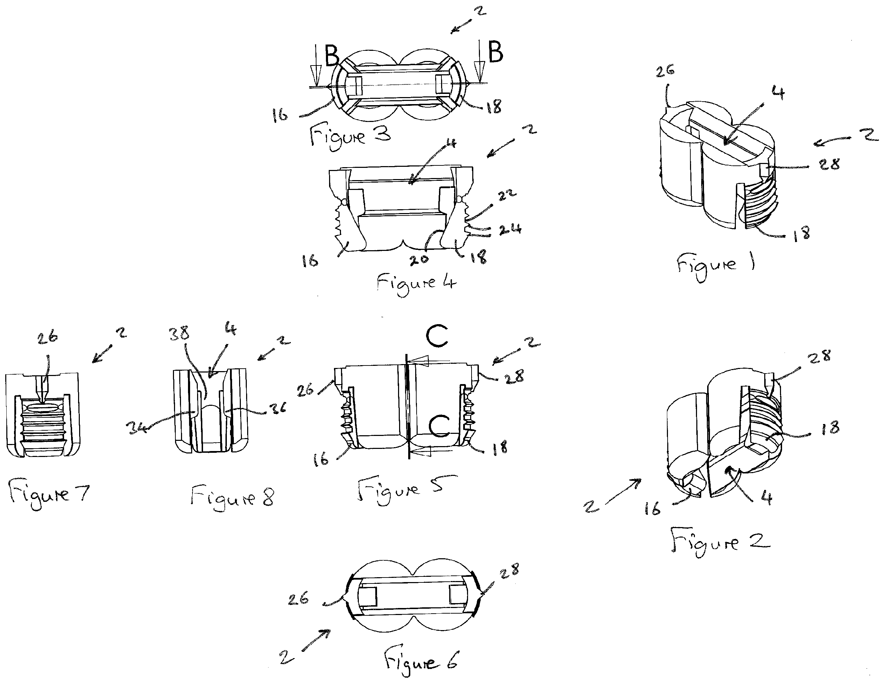

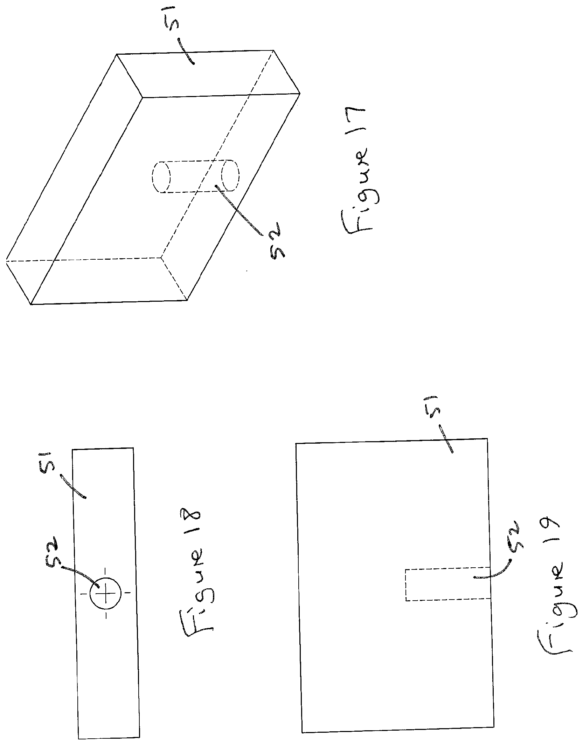

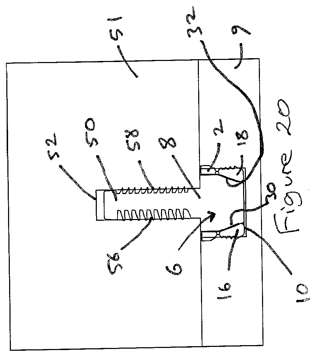

A connector assembly for coupling first and second components of a ready to assemble article of furniture together, in accordance with a first embodiment of the present invention is illustrated in Figures 1 to 20.

The connector assembly includes a female connector 2 comprising an elongate U-section member defining a receiving channel 4 for receiving a first connecting portion 6 of a cooperating male connector 8, the female connector 2 being adapted to be inserted into a cooperating first receiving recess 10 in a face of a first 9 of two components to be coupled together.

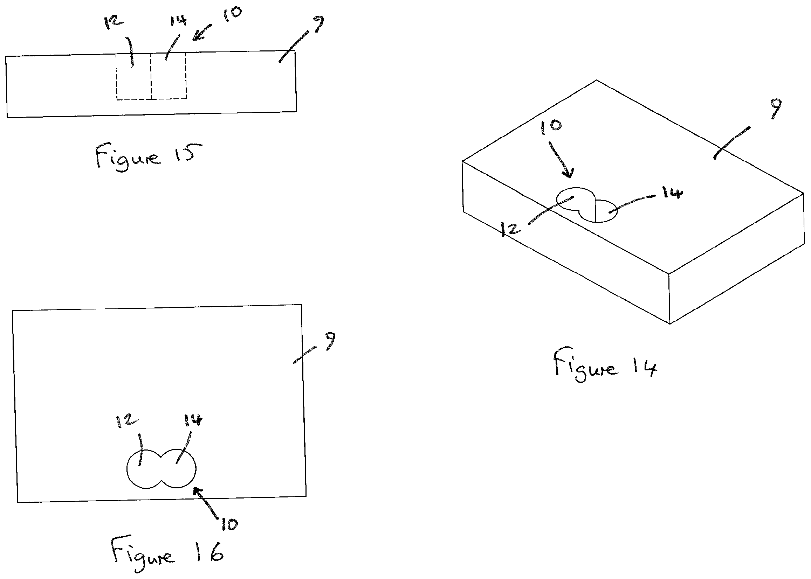

As illustrated in Figures 14 to 16, the first receiving recess 10 is formed by a pair of parallel and overlapping drillings 12,14 in a face of the first component 9, the radii of the two drillings being greater than the spacing of the centres of the drillings such that the thus formed blind bores combine to define a substantially figure of eight shaped recess.

The side faces of the female connector 2 are shaped to correspond to the inner shape of the first receiving recess 10 into which it is inserted.

With reference to Figures 1 to 8, end portions of the female connector 2 include integrally formed cantilevered arms 16,18 extending towards an inner end of the female connector 10 and connected to the remainder of the end portions of the female connector adjacent its outer face by means of live hinges.

Each cantilevered arm 16,18 has an inner face 20 and an outer face 22, the thickness of each cantilevered arm between the inner and outer faces increasing towards a distal end thereof such that the inner face 20 of each cantilevered arm 16,18 defines an inwardly ramped surface engaged by the first connecting portion 6 of the male connector 8 as it is inserted into the receiving channel 4 of the female connector 2, thereby deflecting said cantilevered arms 16,18 outwardly against cooperating inner end faces of the first receiving recess 10 to retain the female connector 2 within the first receiving recess 10. As such, the retaining face holding the female connector 2 within the first receiving recess 10 extends parallel to the longitudinal axis of the first receiving recess 10, mitigating the risk of the material of the first component 9 around the first receiving recess 10 splitting.

The outer face 22 of each cantilevered arm incorporates integrally formed barbs 24 to grip into the inner end faces of the first receiving recess 10. As best shown in Figure 4, the height of the barbs 24 preferably increases towards the distal end of each cantilevered arm 16,18 and some or all of the barbs 24 may be tapered away from the distal end of each cantilevered arm 16,18.

Spurs 26,28 are provided on each end of the female connector 2 adjacent an outer face of the female connector and extending outwardly from either end of the female connector, such spurs 26,28 providing additional grip between the female connector 2 and the first receiving recess 10 while limiting the depth of insertion of the female connector 2 into the first receiving recess 10. After inserting the female connector 2 into the first receiving recess 10, flush with surface of the panel in which the first receiving recess is formed, the spurs 26,28 prevent the female connector 2 from going further into the material. The spurs 26,28 also prevent rotation of the female connector 2 where inserted into a single circular receiving recess or hole. The spurs 26,28 are shaped to engage with the sides of the first receiving recess 10 in a wedge like manner. The female connector 2 is required to be forced into the first receiving recess 10, for example by means of a mallet/hammer (tooling) or a hydraulic arm (mechanical device), until the female connector 2 is left flush with the top surface of the panel at the correct depth setting of the female connector 2 no matter how deep the borehole, the spurs 26,28 preventing the female connector 2 from being pushed too far into the first receiving recess 10.

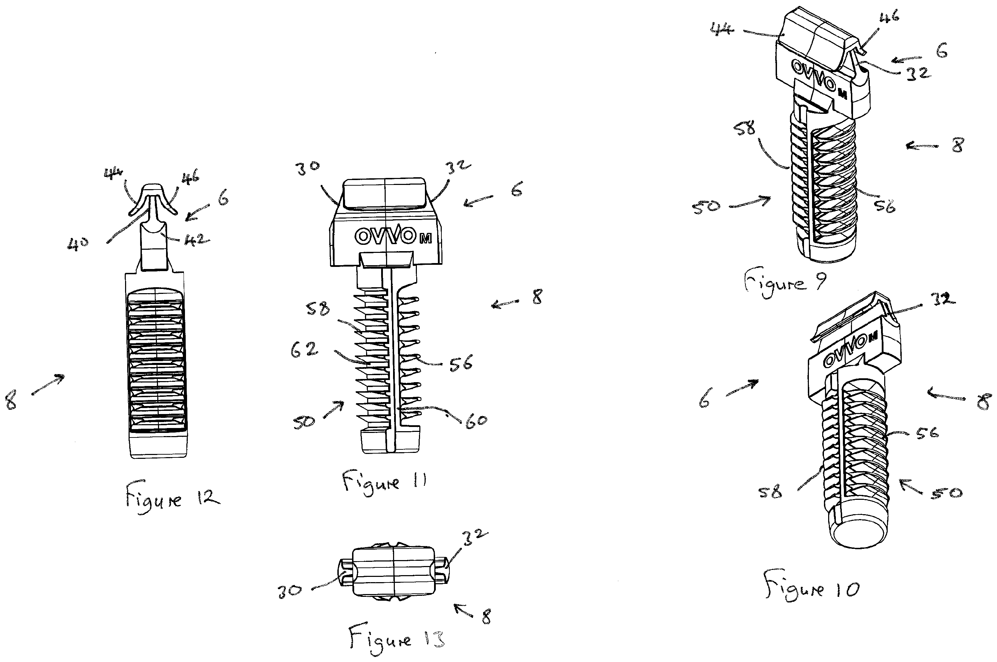

As shown in Figures 9 to 13, with particular reference to Figure 11, the first connecting portion 6 of the male connector 8 includes ramped side regions 30,32 adjacent a distal end thereof, said ramped side regions 30,32 being adapted to engage the inner faces 20 of the cantilevered arms 16,18 of the female connector 2 as the male connector 8 is inserted therein in order to deflect the cantilevered arms 16,18 of the female connector 2 outwardly against the inner end faces of the first receiving recess 10 to retain the female connector 2 therein once the male connector 8 is inserted into the female connector 2.

The receiving channel 4 of the female connector 2 comprises side walls shaped to define a pair of opposing shoulders 34,36 on the inner faces of the receiving channel 4, facing towards one another, the side walls defining a narrow neck region 38 at the outer side of the receiving channel.

The first connecting portion 6 of the male connector 8 comprises a central rib 40 extending outwardly from a base region 42, a distal end of the central rib 40 supporting a respective pair of outwardly flared symmetrically arranged resilient wings 44,46 on either side thereof, said wings 44,46 extending towards the base region 42, the resilient wings 44,46 having a substantially arrow head shaped cross section extending on either side of the central rib 40. Each wing 44,46 is curved in an outwards direction away from the central rib 40 towards the free ends of the wings 44,46.

When the first connecting portion 6 of the male connector 8 is inserted into the receiving channel 4 of the female connector 2 the wings 44,46 pass through the neck region 38 of the receiving channel 4 and then spring out to engage the undersides of the shoulders 34,36 of the receiving channel 4, thereby preventing subsequent removal of the male connector 8 from the female connector 2.

The resilient wings 44,46 of the first connecting portion 6 of the male connector 8 are resiliently displaceable towards to the respective central rib 40 to enable the wings 44,46 to pass through the narrowed neck region 38 of the receiving channel 4 of the female connector 2, the distal ends of the resilient wings 44,46 engaging the shoulders 34,36 of the receiving channel of the female connector 2 once the male connector 8 has been inserted therein to retain the male connector 8 therein.

The outward curvature of each resilient wing 44,46 ensures that the connector assembly resists any forces attempting to pull the connector assembly apart, such forces causing the wings 44,46 to bend outwardly, ensuring that the distal ends of the wings 44,46 remain firmly located behind the respective shoulders 34,36 of the receiving channel 4 of the female connector 2. The curvature provides a resilience to the wings 44,46 such that the male connector 20 is effectively spring loaded within the respective female connector 2. The base region 22 of the male connector 20 is dimensioned to be received within the neck region 38 of the receiving channel of the female connector 2 when the male connector 20 is inserted therein.

As shown in Figures 9 to 13, a second connecting portion 50 of the male connector 8 is adapted to be received within a second receiving recess 52 formed, in use, in a face of the second article 51. Preferably the first and second connecting portions 6,50 of the male connector 8 extend in opposite directions from a central region 54 of the male connector 8.

In the embodiment shown, the second receiving recess 52 comprises a single blind bore formed by drilling a hole in a face of the second article 51.

The second connecting portion 50 of the male connector 8 may be in the form of a dowel of the type discloses in WO 2021/170526. Sets of barbs 56,58 are disposed along the second connecting portion 50 of the male connector 8, angled to hinder or prevent the removal of the second connecting portion 50 from the second receiving recess 52 when inserted therein.

The second connecting portion 50 of the male connector 8 has a flat face 60 on a first side thereof, a first set 56 of said barbs extending in cantilever manner from said flat face 60, the second connecting portion 50 of the male connector 8 having a curved face 62 on a second side thereof, opposite said first side, a second set 58 of said barbs, having an arcuate shape, extending from said curved face 62.

The outermost ends of the barbs 56,58 are shaped to define a substantially cylindrical outer surface of the second connecting portion 50 of the male connector 8 of slightly larger diameter than that of the second receiving recess 52.

Each first set of barbs 56 extend in cantilever manner from the flat face 60 of the second connecting portion 50 of the male connector 8 to provide enhanced resistance to removal by virtue of said first sets of barbs 56 being longer than the arcuate second sets of barbs 58 extending from the curved face 62 of the second connecting portion 50 of the male connector 8, the first sets of barbs 56 providing a relatively strong lever action against the sides of the second receiving recess 52 compared to known arcuate barbs, such that said first sets of barbs 56 act to urge the second set of barbs 58 against the side of the second receiving recess 52, thereby providing enhanced resistance to removal of the male connector 8 from the second receiving recess 52.

Alternatively it is envisaged that the second connecting portion of the male connector 8 may be identical and a mirror image of the first connecting portion, the second receiving recess being identical to the first receiving recess, the second connecting portion of the male connector being insertable into a further female connector of the type described above, said further female connector being inserted into the second receiving recess.

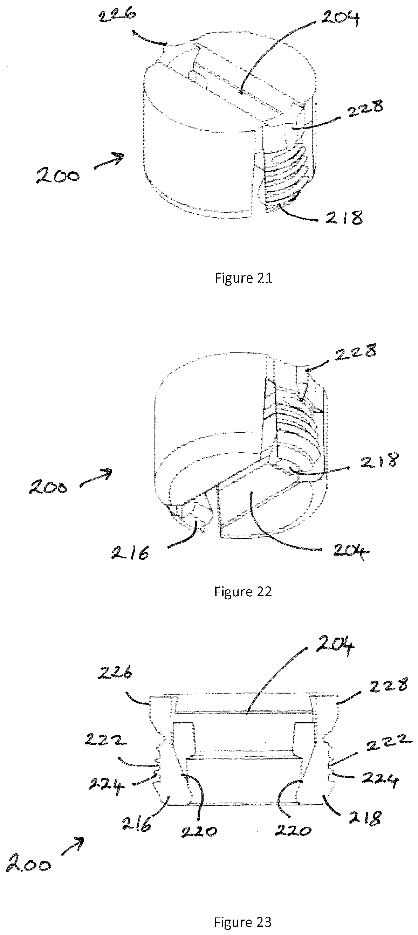

Figures 21 to 23 illustrate a connector assembly not in accordance with the present invention wherein the female connector 200 has a circular profile in plan view, adapted to be inserted in a single hole first receiving recesst, the female connector 200 defining a receiving channel 204 for receiving a first connecting portion of a cooperating male connector of the same type as that shown in relation to the first embodiment, the female connector 200 being adapted to be inserted into a cooperating blind bore defining a first receiving recess in a face of a first of two components to be coupled together.

The female connector 200 include integrally formed cantilevered arms 216,218 on opposite side regions of the female connector and extending towards an inner end of the female connector 200 and connected to the remainder of the end portions of the female connector adjacent its outer face by means of live hinges, each cantilevered arm 216,218 having an inner face 220 and an outer face 222, the thickness of each cantilevered arm between the inner and outer faces increasing towards a distal end thereof such that the inner face 220 of each cantilevered arm 216,218 defines an inwardly ramped surface engaged by the first connecting portion of the male connector as it is inserted into the receiving channel of the female connector 200, thereby deflecting said cantilevered arms 216,218 outwardly against cooperating inner faces of the first receiving recess to retain the female connector 200 within the first receiving recess.

The outer face 222 of each cantilevered arm incorporates integrally formed barbs 224 to grip into the inner faces of the first receiving recess. Spurs 226,228 are provided on opposite sides of the female connector 200 adjacent an outer face of the female connector 200 and adjacent each cantilevered arm 216,218, such spurs limiting the depth of insertion of the female connector 200 into the first receiving recess and preventing rotation of the female connector 200 within the first receiving recess.

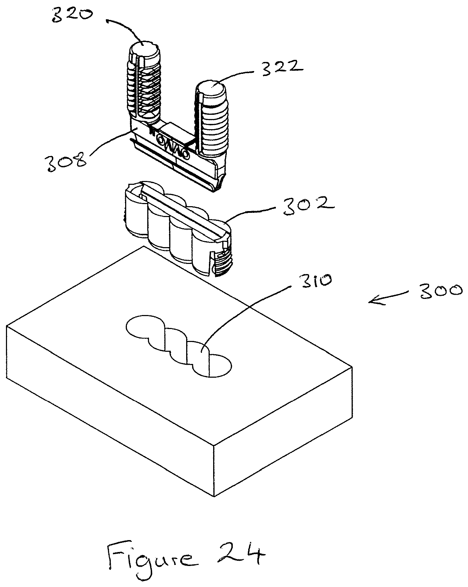

Figure 24 illustrates a connector assembly 300 in accordance with a further embodiment of the present invention, wherein the first receiving recess 310 is formed from four parallel and overlapping holes do define a longer recess. In such embodiment the length of both the female connector 302 and male connector 308 are corresponding increased. The increased length of the male connector 308 allows the male connector to be attached to a second article by means of a pair of parallel barbed second connecting portions 320,322 form at either end of the male connector 308 and each adapted to be received within a respective second receiving recess formed, in use, in a face of the second article.

While the connector assembly of the present invention has been described in relation to a ready to assemble/self assembly article of furniture, it is envisaged that such connector assembly may be utilised to interconnect a wide variety of articles, such as in automotive assemblies, or any other application where it is desired to couple to connect two articles in a rapid and reliable manner without requiring the use of tools. The connector assembly in accordance with the present invention may be used on all types of self assembly furniture wherein butting panels need to be attached to one another.

The invention is not limited to the embodiments described herein but can be amended or modified within the scope of the present invention as defined by the appended claims.

## Claims

1. A connector assembly comprising a first article (9), a second article (51), a male connector (8) having a first connecting portion (6) insertable into a receiving channel (4) defined by a female connector (2) and at least one second connecting portion (50) adapted to be received within at least one second receiving recess (52) formed in a face of the second article (51), wherein said at least one second receiving recess (52) comprises at least one blind bore formed by a drilling in said face of the second article (51), said female connector (2) being adapted to be located in a first receiving recess (10) formed in a face of the first article (9), wherein said first receiving recess (10) comprises two or more intersecting and parallel blind bores in said face of the first article (9) wherein the blind bores of said first receiving recess have equal radii, the spacing of the centres of said blind bores being less than the radius of each bore, outer regions of said female connector (2) including end portions (16,18) adapted to engage opposing inner end faces of said first receiving recess (10), said end portions (16,18) of the female connector (2) being acted upon by the male connector (8) to be displaced outwardly to engage said opposing inner end faces of the first receiving recess (10) when the male connector (8) is inserted into the receiving channel (4) of the female connector (2), wherein said end portions (16,18) of the of the female connector (2) comprise integrally formed cantilevered arms, each having an outer face (22) and an inner face (20), the inner face (20) of each cantilevered arm defining a ramped surface engaged by the first connecting portion (6) of the male connector (8) as it is inserted into the receiving channel (4) of the female connector (2), thereby deflecting said cantilevered arms (16,18) outwardly against the inner end faces of the first receiving recess (10), and wherein opposing inner side faces of the receiving channel (4) of the female connector (2) and cooperating outer side faces of the first connecting portion (6) of the male connector (8) are provided with cooperating formations to retain the male connector (8) within the female connector (2) when the first connecting portion (6) of the male connector (8) is inserted into the receiving channel (4) of the female connector (2).

2. An assembly as claimed in claim 1, wherein the outer face (22) of each cantilevered arm (16,18) is barbed (24) to grip the inner end faces of the first receiving recess (10).

3. An assembly as claimed in any preceding claim, wherein side surfaces of the female connector (2) are shaped to correspond to the shape of the first receiving recess (10).

4. An assembly as claimed in any preceding claim, wherein the first connecting portion (6) of the male connector (8) includes ramped end regions (30,32) adapted to engage said inner faces (20) of the cantilevered arms (16,18) of the female connector (2) as the male connector (8) is inserted therein.

5. An assembly as claimed in any preceding claim, wherein inner sides of the receiving channel (4) defined by the female connector (2) comprise a pair of opposing shoulders (34,36) and narrowed neck region (38), said first connecting portion (6) of the male connector (8) comprising a central rib (40) extending outwardly from a base region (42) and terminating in a head region, a pair of symmetrically arranged outwardly flared resilient wings (44,46) having a substantially arrow head shaped cross section extending from the head region towards said base region (42) on either side of said central rib (40), whereby said resilient wings (44,46) of said first connecting portion of the male connector are adapted to engage said opposing shoulders (34,36) of the female connector when the male connector is inserted into the female connector to retain the male connector in engagement with the female connector.

6. An assembly as claimed in any preceding claim, wherein said male connector (8) has at least one second connecting portion (50) adapted to be received within said at least one second receiving recess (52).

7. An article of furniture incorporating the assembly of any of claims 1 to 6.

8. A method of assembling first and second articles using a connector assembly comprising a male connector having a first connecting portion insertable into a receiving channel defined by a respective female connector, comprising the steps of drilling at least one blind bore in said face of the first article to form a first receiving recess, locating said female connector into said first receiving recess whereby outer portions of said female connector engage opposing inner faces of said receiving recess, and inserting the first connecting portion of the male connector into the receiving channel of the female connector whereby the connecting portion of the male connector acts against moveable end portions of the female connector such that said end portions are displaced outwardly to engage opposing inner end faces of the first receiving recess to retain the female connector within the first receiving recess, wherein formation of said first receiving recess comprises drilling two or more intersecting and parallel blind bores in said face of the first article, said blind bores of said first receiving recess having equal radius, the spacing of the centres of said blind bores being less than the radius of each bore, wherein said end portions of the of the female connector comprise integrally formed cantilevered arms each having an outer face and an inner face, the inner face of each cantilevered arm defining a ramped surface engaged by the first connecting portion of the male connector as it is inserted into the receiving channel of the female connector, thereby deflecting said cantilevered arms outwardly against the inner end faces of the first receiving recess and comprising the further step of drilling at least one blind bore in a face of the second article to define at least one second receiving recess and inserting at least one second connecting portion of the male connector into said at least one second receiving recess to secure the male connector to the second article.

9. A method as claimed in claim 8, wherein the at least one second connecting portion of the male connector is provided with barbs or other formations adapted to retain the at least one second connecting portion of the male connector within the at least one second receiving recess.

10. A method as claimed in claim 8 or claim 9, wherein an outer surface of each cantilevered arm is barbed to grip the inner end faces of the first receiving recess.

## Patentansprüche

1. Verbinderanordnung, umfassend einen ersten Gegenstand (9), einen zweiten Gegenstand (51), einen Stecker (8) aufweisend einen ersten Verbindungsabschnitt (6), der in einen Aufnahmekanal (4) einführbar ist, der durch eine Buchse (2) definiert wird, und mindestens einen zweiten Verbindungsabschnitt (50), der angepasst ist, um in mindestens einer zweiten Aufnahmeaussparung (52) aufgenommen zu werden, die in einer Fläche des zweiten Gegenstands (51) ausgebildet ist, wobei die mindestens eine zweite Aufnahmeaussparung (52) mindestens eine Sacklochbohrung umfasst, die durch eine Bohrung in der Fläche des zweiten Gegenstands (51) ausgebildet ist, wobei die Buchse (2) angepasst ist, um in einer ersten Aufnahmeaussparung (10) angeordnet zu werden, die in einer Fläche des ersten Gegenstands (9) ausgebildet ist, wobei die erste Aufnahmeaussparung (10) zwei oder mehr sich überschneidende und parallele Sacklochbohrungen in der Fläche des ersten Gegenstands (9) umfasst, wobei die Sacklochbohrungen der ersten Aufnahmeaussparung gleiche Radien aufweisen, wobei der Abstand der Mittelpunkte der Sacklochbohrungen kleiner als der Radius jeder Bohrung ist, wobei äußere Bereiche der Buchse (2) Endabschnitte (16, 18) einschließen, die angepasst sind, um mit gegenüberliegenden inneren Endflächen der ersten Aufnahmeaussparung (10) in Eingriff zu kommen, wobei auf die Endabschnitte (16, 18) der Buchse (2) durch den Stecker (8) eingewirkt wird, damit sie nach außen verlagert werden, um mit den gegenüberliegenden inneren Endflächen der ersten Aufnahmeaussparung (10) in Eingriff zu kommen, wenn der Stecker (8) in den Aufnahmekanal (4) der Buchse (2) eingeführt wird, wobei die Endabschnitte (16, 18) der Buchse (2) einstückig ausgebildete freitragende Arme umfassen, die jeweils eine Außenfläche (22) und eine Innenfläche (20) aufweisen, wobei die Innenfläche (20) jedes freitragenden Arms eine geneigte Oberfläche definiert, mit der der erste Verbindungsabschnitt (6) des Steckers (8) in Eingriff kommt, wenn er in den Aufnahmekanal (4) der Buchse (2) eingeführt wird, wodurch die freitragenden Arme (16, 18) nach außen gegen die inneren Endflächen der ersten Aufnahmeaussparung (10) abgebogen werden, und wobei gegenüberliegende innere Seitenflächen des Aufnahmekanals (4) der Buchse (2) und zusammenwirkende äußere Seitenflächen des ersten Verbindungsabschnitts (6) des Steckers (8) mit zusammenwirkenden Ausbildungen versehen sind, um den Stecker (8) in der Buchse (2) zu halten, wenn der erste Verbindungsabschnitt (6) des Steckers (8) in den Aufnahmekanal (4) der Buchse (2) eingeführt wird.

2. Anordnung nach Anspruch 1, wobei die Außenfläche (22) jedes freitragenden Arms (16, 18) mit Widerhaken (24) versehen ist, um die inneren Endflächen der ersten Aufnahmeaussparung (10) zu greifen.

3. Anordnung nach einem der vorhergehenden Ansprüche, wobei Seitenoberflächen der Buchse (2) so geformt sind, dass sie der Form der ersten Aufnahmeaussparung (10) entsprechen.

4. Anordnung nach einem der vorhergehenden Ansprüche, wobei der erste Verbindungsabschnitt (6) des Steckers (8) geneigte Endbereiche (30, 32) einschließt, die angepasst sind, um mit den Innenflächen (20) der freitragenden Arme (16, 18) der Buchse (2) in Eingriff zu kommen, wenn der Stecker (8) darin eingeführt wird.

5. Anordnung nach einem der vorhergehenden Ansprüche, wobei Innenseiten des Aufnahmekanals (4), der durch die Buchse (2) definiert wird, ein Paar von gegenüberliegenden Schultern (34, 36) und einen verengten Halsbereich (38) umfassen, wobei der erste Verbindungsabschnitt (6) des Steckers (8) eine zentrale Rippe (40) umfasst, die sich von einem Basisbereich (42) nach außen erstreckt und in einem Kopfbereich endet, ein Paar von symmetrisch angeordneten, nach außen aufgeweiteten elastischen Flügeln (44, 46), die einen im Wesentlichen pfeilspitzenförmigen Querschnitt aufweisen, die sich von dem Kopfbereich in Richtung des Basisbereichs (42) auf jeder Seite der zentralen Rippe (40) erstrecken, wodurch die elastischen Flügel (44, 46) des ersten Verbindungsabschnitts des Steckers angepasst sind, um mit den gegenüberliegenden Schultern (34, 36) der Buchse in Eingriff zu kommen, wenn der Stecker in die Buchse eingeführt wird, um den Stecker in Eingriff mit der Buchse zu halten.

6. Anordnung nach einem der vorhergehenden Ansprüche, wobei der Stecker (8) mindestens einen zweiten Verbindungsabschnitt (50) aufweist, der angepasst ist, um in der mindestens einen zweiten Aufnahmeaussparung (52) aufgenommen zu werden.

7. Möbelstück, das die Anordnung nach einem der Ansprüche 1 bis 6 beinhaltet.

8. Verfahren zum Zusammenbauen eines ersten und eines zweiten Gegenstands unter Verwendung einer Verbinderanordnung, umfassend einen Stecker aufweisend einen ersten Verbindungsabschnitt, der in einen Aufnahmekanal einführbar ist, der durch eine jeweilige Buchse definiert wird, umfassend die Schritte Bohren mindestens einer Sacklochbohrung in der Fläche des ersten Gegenstands, um eine erste Aufnahmeaussparung zu bilden, Anordnen der Buchse in der ersten Aufnahmeaussparung, wodurch äußere Abschnitte der Buchse mit gegenüberliegenden Innenflächen der Aufnahmeaussparung in Eingriff kommen, und Einführen des ersten Verbindungsabschnitts des Steckers in den Aufnahmekanal der Buchse, wodurch der Verbindungsabschnitt des Steckers gegen bewegliche Endabschnitte der Buchse wirkt, sodass die Endabschnitte nach außen verlagert werden, um mit gegenüberliegenden inneren Endflächen der ersten Aufnahmeaussparung in Eingriff zu kommen, um die Buchse innerhalb der ersten Aufnahmeaussparung zu halten, wobei eine Bildung der ersten Aufnahmeaussparung das Bohren von zwei oder mehr sich überschneidenden und parallelen Sacklochbohrungen in der Fläche des ersten Gegenstands umfasst, wobei die Sacklochbohrungen der ersten Aufnahmeaussparung einen gleichen Radius aufweisen, wobei der Abstand der Mittelpunkte der Sacklochbohrungen kleiner als der Radius jeder Bohrung ist, wobei die Endabschnitte der Buchse einstückig ausgebildete freitragende Arme umfassen, die jeweils eine Außenfläche und eine Innenfläche aufweisen, wobei die Innenfläche jedes freitragenden Arms eine geneigte Oberfläche definiert, mit der der erste Verbindungsabschnitt des Steckers in Eingriff kommt, wenn er in den Aufnahmekanal der Buchse eingeführt wird, wodurch die freitragenden Arme nach außen gegen die inneren Endflächen der ersten Aufnahmeaussparung abgebogen werden, und umfassend den weiteren Schritt des Bohrens mindestens einer Sacklochbohrung in einer Fläche des zweiten Gegenstands, um mindestens eine zweite Aufnahmeaussparung zu definieren, und des Einführens mindestens eines zweiten Verbindungsabschnitts des Steckers in die mindestens eine zweite Aufnahmeaussparung, um den Stecker an dem zweiten Gegenstand zu sichern.

9. Verfahren nach Anspruch 8,
wobei der mindestens eine zweite Verbindungsabschnitt des Steckers mit Widerhaken oder anderen Ausbildungen versehen ist, die angepasst sind, um den mindestens einen zweiten Verbindungsabschnitt des Steckers innerhalb der mindestens einen zweiten Aufnahmeaussparung zu halten.

10. Verfahren nach Anspruch 8 oder Anspruch 9,
wobei eine äußere Oberfläche jedes freitragenden Arms mit Widerhaken versehen ist, um die inneren Endflächen der ersten Aufnahmeaussparung zu greifen.

## Revendications

1. Ensemble connecteur comprenant un premier article (9), un second article (51), un connecteur mâle (8) présentant une première partie de connexion (6) insérable dans un canal de réception (4) défini par un connecteur femelle (2) et au moins une seconde partie de connexion (50) conçue pour être reçue dans au moins un second logement de réception (52) formé dans une face du second article (51), dans lequel ledit au moins second logement de réception (52) comprend au moins un alésage borgne formé par perçage dans ladite face du second article (51), ledit connecteur femelle (2) est conçu pour être logé dans un premier logement de réception (10) formé dans une face du premier article (9), dans lequel ledit premier logement de réception (10) comprend deux alésages borgnes sécants et parallèles ou plus dans ladite face du premier article (9), dans lequel les alésages borgnes dudit premier logement de réception ont des rayons égaux, l'écartement entre les centres desdits alésages borgnes étant inférieur au rayon de chaque alésage, des régions extérieures dudit connecteur femelle (2) comportent des parties d'extrémité (16, 18) conçues pour entrer en contact avec des faces d'extrémité intérieures opposées dudit premier logement de réception (10), lesdites parties d'extrémité (16, 18) du connecteur femelle (2) sont déplacées vers l'extérieur par le connecteur mâle (8) afin d'entrer en contact avec des faces d'extrémité intérieures opposées du premier logement de réception (10) lorsque le connecteur mâle (8) est inséré dans le canal de réception (4) du connecteur femelle (2), dans lequel lesdites parties d'extrémité (16, 18) du connecteur femelle (2) comprennent des bras en porte-à-faux monoblocs, chacun présentant une face extérieure (22) et une face intérieure (20), la face intérieure (20) de chaque bras en porte-à-faux définit une surface inclinée qui entre en contact avec la première partie de connexion (6) du connecteur mâle (8) lors de son insertion dans le canal de réception (4) du connecteur femelle (2), déviant ainsi lesdits bras en porte-à-faux (16, 18) vers l'extérieur contre les faces d'extrémité intérieures du premier logement de réception (10), et dans lequel les faces latérales intérieures opposées du canal de réception (4) du connecteur femelle (2) et des faces latérales extérieures coopérantes de la première partie de connexion (6) du connecteur mâle (8) sont dotées de formations coopérantes pour retenir le connecteur mâle (8) à l'intérieur du connecteur femelle (2) lorsque la première partie de connexion (6) du connecteur mâle (8) est insérée dans le canal de réception (4) du connecteur femelle (2).

2. Ensemble selon la revendication 1, dans lequel la face extérieure (22) de chaque bras en porte-à-faux (16,18) est munie de barbes (24) pour saisir les faces d'extrémité intérieures du premier logement de réception (10).

3. Ensemble selon une quelconque revendication précédente, dans lequel les surfaces latérales du connecteur femelle (2) sont façonnées pour correspondre à la forme du premier logement de réception (10).

4. Ensemble selon une quelconque revendication précédente, dans lequel la première partie de connexion (6) du connecteur mâle (8) comporte des régions d'extrémité inclinées (30,32) conçues pour être en contact avec lesdites faces intérieures (20) des bras en porte-à-faux (16,18) du connecteur femelle (2) lorsque le connecteur mâle (8) y est inséré.

5. Ensemble selon une quelconque revendication précédente, dans lequel les côtés intérieurs du canal de réception (4) défini par le connecteur femelle (2) comprennent une paire d'épaulements opposés (34, 36) et une région de col rétrécie (38), ladite première partie de connexion (6) du connecteur mâle (8) comprenant une nervure centrale (40) s'étendant vers l'extérieur à partir d'une région de base (42) et se terminant dans une région de tête, une paire d'ailes élastiques évasées vers l'extérieur (44, 46) disposées symétriquement et présentant une section transversale sensiblement en forme de pointe de flèche s'étendant de la région de tête vers ladite région de base (42) de chaque côté de ladite nervure centrale (40), moyennant quoi lesdites ailes élastiques (44, 46) de ladite première partie de connexion du connecteur mâle sont adaptées pour entrer en contact avec lesdits épaulements opposés (34, 36) du connecteur femelle lorsque le connecteur mâle est inséré dans le connecteur femelle afin de maintenir le connecteur mâle en contact avec le connecteur femelle.

6. Ensemble selon une quelconque revendication précédente, dans lequel ledit connecteur mâle (8) présente au moins une seconde partie de connexion (50) conçue pour être reçue dans ledit au moins un second logement de réception (52).

7. Article de mobilier incorporant l'ensemble selon l'une quelconque des revendications 1 à 6.

8. Procédé d'assemblage d'un premier et d'un second articles à l'aide d'un ensemble connecteur comprenant un connecteur mâle présentant une première partie de connexion insérable dans un canal de réception défini par un connecteur femelle respectif, comprenant les étapes suivantes : perçage d'au moins un alésage borgne dans ladite face du premier article afin de former un premier logement de réception ; positionnement dudit connecteur femelle dans ledit premier logement de réception, moyennant quoi des parties extérieures dudit connecteur femelle entrent en contact avec les faces intérieures opposées dudit logement de réception ; et insertion de la première partie de connexion du connecteur mâle dans le canal de réception du connecteur femelle, moyennant quoi la partie de connexion agit contre les parties d'extrémité mobiles du connecteur femelle, de sorte que lesdites parties d'extrémité soient déplacées vers l'extérieur pour entrer en contact avec les faces intérieures opposées du premier logement de réception et maintenir ainsi le connecteur femelle à l'intérieur de celui-ci, dans lequel la formation dudit premier logement de réception comprend le perçage de deux alésages borgnes sécants et parallèles ou plus dans ladite face du premier article, lesdits alésages borgnes dudit logement de réception présentant un rayon égal, l'écartement entre les centres desdits alésages borgnes étant inférieur au rayon de chaque alésage, dans lequel lesdites parties d'extrémité du connecteur femelle comprennent des bras en porte-à-faux monoblocs présentant chacun une face extérieure et une face intérieure, la face intérieure de chaque bras en porte-à-faux définissant une surface inclinée qui entre en contact avec la première partie de connexion du connecteur mâle lorsqu'elle est insérée dans le canal de réception du connecteur femelle, déviant ainsi lesdits bras en porte-à-faux vers l'extérieur contre les faces d'extrémité intérieures du premier logement de réception, et comprenant l'étape supplémentaire de perçage d'au moins un alésage borgne dans une face du second article pour définir au moins un second logement de réception et d'insertion d'au moins une seconde partie de connexion du connecteur mâle dans ledit au moins un second logement de réception pour fixer le connecteur mâle au second article.

9. Procédé selon la revendication 8,
dans lequel la au moins une seconde partie de connexion du connecteur mâle est munie de barbes ou d'autres formations conçues pour retenir la au moins seconde partie de connexion du connecteur mâle à l'intérieur du au moins un second logement de réception.

10. Procédé selon la revendication 8 ou la revendication 9, dans lequel une surface extérieure de chaque bras en porte-à-faux est munie de barbes pour saisir les faces d'extrémité intérieures du premier logement de réception.
